Europäisches Patentamt

European Patent Office

Office européen des brevets

(11) Veröffentlichungsnummer: **0 196 354 B1**

# EUROPÄISCHE PATENTSCHRIFT

(45) Veröffentlichungstag der Patentschrift:
06.09.89

(51) Int. Cl.⁴: **G 01 T 1/163, G 01 T 1/167**

(21) Anmeldenummer: **85107746.1**

(22) Anmeldetag: **22.06.85**

(54) Vorrichtung zur Kontaminationsüberwachung gegen Strahlungsverseuchung von Personen.

Teilanmeldung 86112683 eingereicht am 13.09.86.

(30) Priorität: **18.02.85  DE 3505527**

(43) Veröffentlichungstag der Anmeldung:
08.10.86 Patentblatt 86/41

(45) Bekanntmachung des Hinweises auf die Patenterteilung:
06.09.89 Patentblatt 89/36

(84) Benannte Vertragsstaaten:
**FR GB IT SE**

(56) Entgegenhaltungen:
EP-A- 0 060 574
WO-A-83/01109
FR-A- 2 311 319

"IPM 7 Microprocessor Controlled Personnel Contamination Monitor", 1982

Die Akte enthält technische Angaben, die nach dem Eingang der Anmeldung eingereicht wurden und die nicht in dieser Patentschrift enthalten sind.

(73) Patentinhaber: **HERFURTH GMBH, Beerenweg 6 - 8, D-2000 Hamburg 50 (DE)**

(72) Erfinder: **Rische, Uwe W., Dipl.-Phys., Waldweg 15, D-2106 Bendestorf (DE)**
Erfinder: **Gerlach, Rainer, Dipl.-Ing., Hellgrund 56, D-2000 Wedel/Holst. (DE)**

(74) Vertreter: **Kretzschmar, Otto Robert, Dipl.-Ing., Beim Strohhause 34, D-2000 Hamburg 1 (DE)**

## Beschreibung

Die Erfindung betrifft eine Vorrichtung zur Kontaminationsüberwachung gegen Strahlungsverseuchung von Personen, mit einer Trittfläche als Bodenplatte, die einen Fussdetektor aufweist, der für jeden Fuss eine Detektoreinheit hat, und mit in jeweils einer zur Trittfläche senkrechten Ebene angeordneten flächigen Detektoren, die in einem Winkel von ungleich 0° zueinander angeordnet sind und einen Teilraum für eine zu untersuchende Person begrenzen.

In solchen Kontaminationsschleusen werden Vorder- und Rückseite einer Person gemessen, wobei die Einstellung gleicher Abstände problematisch ist. Bei zwei Messungen ergeben sich kleine Abstände und grosse Empfindlichkeit.

Bekannt sind Kontaminationsschleusen, welche seitliche Ein- und Ausgangstüren haben, die auch mit Detektoren ausgestattet sind und die am Boden zwei Detektoren zum Aufstellen der Füsse aufweisen.

Gemäss der FR-A 2 311 319 ist eine Personenverkehrsüberwachungs-Einrichtung bekannt, die in Form eines Personendurchganges als Schleuse ausgebildet ist und an deren beiderseitigen Wandteilen flächige Detektoren angeordnet sind, die parallel zueinander und mit Abstand voneinander vorgesehen sind. Dabei sind seitlich an einem Wandteil einer Schleuse als Personendurchgang Zählboxen zur Überwachung der Hände mit Lichtkontakten angeordnet, die zur Einführung und Überwachung der Hände dienen. Gegenüberliegende Wandteile der Schleuse enthalten dabei als Grossflächenzähler bezeichnete, in zwei Messebenen in bestimmtem Abstand gegenüberliegende Detektoren, die in der Waagerechten, aber nicht in der Senkrechten unterteilt sind.

Aus der DE-PS 2 016 857 ist darüber hinaus eine dem zuvor geschilderten Stand der Technik entsprechend torförmig als Durchgang ausgeführte Personenverkehrsüberwachungs-Einrichtung bekannt, die zwei Türen aufweist, welche so gesteuert werden, dass sich nach Öffnen einer Tür die andere nur öffnen lässt, wenn keine Gamma-Kontamination festgestellt wurde.

Eine entsprechende Schleuse mit zwei Türen geht auch aus der DE-PS 2 135 578 hervor. Bei dieser erfassen die Steuermittel der Schleusenverriegelungs-Einrichtung zusätzlich Neutronen emittierende radioaktive Kontaminationen.

Eine eingangs angegebene Ausführung mit winklig zueinander angeordneten Detektoren ist bekannt aus der Druckschrift der Fa. Nuclear Enterprises Ltd. «IPM7 Microprocessor Controlled Personnel Contamination Monitor», 1982. Diese Ausführung hat eine in Draufsicht winklige Konfiguration von wenigstens drei flächigen Detektoren. In Draufsicht flankieren dabei zwei flächige Detektoren einen mittleren flächigen Detektor unter je einem Winkel in der Grössenordnung von etwa 135°.

Diese Ausführung ermöglicht zwar durch die nischenartige Ausbildung der Überwachungsvorrichtung eine grosse Nähe zu einer zu überwachenden Person, dabei entsteht aber der Nachteil, dass zwei Messlücken in den Winkeln zwischen den winklig zueinander angeordneten äusseren Detektoren und einem mittleren Detektor auftreten, wobei diese Detektoren jeweils für sich säulenartig mit einer flächigen Seite ausgeführt sind und damit aber drei Detektorsäulen vorliegen.

Bei den bekannten Ausführungen ergeben sich auch Probleme bei der Überwachung der Vorder- und Rückseite einer Person, wenn diese keine definierte Stellung einnimmt. Unter -diesem Gesichtspunkt ist aus der DE-OS 2 413 027 eine Vorrichtung mit einer nur in horizontaler Richtung unterteilten Säule aus Detektoren bekannt, bei welcher die Fussplatte als Drehteiler oder Drehscheibe ausgeführt ist, so dass eine zu überprüfende Person für jeden Messvorgang ihre jeweilige Stellung beibehalten kann. Der Aufwand dabei ist erheblich. Die Integration von Handboxen ist nicht möglich. Ausserdem ist nur eine Detektorsäule angeordnet, so dass sich eine unzureichende Messgeometrie ergibt.

Der Erfindung liegt die Aufgabe zugrunde, ausgehend von einer Vorrichtung gemäss Oberbegriff, eine technisch einfachere und damit kostengünstiger herstellbare Überwachungsanordnung zu schaffen, die eine gute Gleichmässigkeit der Empfindlichkeit hat und gut reproduzierbare Messergebnisse liefert.

Diese Aufgabe wird erfindungsgemäss dadurch gelöst, dass zwei aneinander angeordnete flächige Detektoren vorgesehen sind, die jeweils senkrecht zur Trittfläche in ihrem mittleren Bereich eine Unterteilung aufweisen, die an der Stelle vorgesehen ist, an der die flächigen Detektoren den geringsten Abstand von einem als Referenzfigur eingesetzten Standardkörper besitzen.

Gegenüber den bekannten im Messbereich vergleichbaren Ausführungen kann mit weniger Detektoren und auch mit einem einfachen Aufbau ausgekommen werden, wobei die geringe Anzahl von flächigen Detektoren eine Verminderung von Lücken in der horizontalen Messgeometrie bewirkt, so dass bei einfacherer Konfiguration ein genaueres Ergebnis erreicht wird. Wesentlich ist aber, dass das Empfindlichkeitsmaximum in der Detektormitte gegenüber den übrigen Bereichen nicht überproportional hoch wird. Dadurch kann ein gleichmässiges Empfindlichkeitsprofil mit nur zwei Detektoren realisiert werden. Durch die angegebene Unterteilung der zwei Detektoren wird zugleich eine Reduzierung des Null-Effektes erreicht.

Mit besonderem Vorteil sind die Aufnahmeflächen der beiden flächigen Detektoren zueinander in einem Winkel von 90° bis 118° angeordnet. Hierbei ist eine Grössenordnung geschaffen, die durchaus die Anpassung an verschiedene Referenzfiguren (Standardkörper) zulässt.

Oben ist bereits eine Referenzfigur genannt. Die optimale Ausführung sieht für eine elliptische Referenzfigur mit 35 cm Hauptachse und 95 cm Umfang (ICRP) vor, dass die beiden flächigen Detektoren bezüglich ihrer Aufnahmeflächen einen Winkel in der Grössenordnung von 104° einschliessen. Dies ist eine besonders vorteilhafte Ausgestaltung.

Solche Referenzfiguren sind aus Veröffentlichungen bekannt. Beispielsweise wird auf einen Entwurf IEC «Installed Personal Monitoring Assemblies» mit der Nummer 45B WG7 (Dray) 3 verwiesen, wo auch ein bestimmter elliptischer Querschnitt mit einer bestimmten Umfangslänge und einer grossen Achsabmessung angegeben ist. Ausserdem ist aus dem Buch von Elmar Schrüfer «Strahlung und Strahlungsmesstechnik in Kernkraftwerken» 1974 aus den Seiten 224 und 225 bekannt, Eigenschaften eines sogenannten «Standard-Menschen» festzustellen, und zwar als Basis dafür, dass eine sogenannte Standardfigur entsprechend einer Bezugs- oder Referenzfigur gewonnen wird.

Aus obigen Darlegungen ergibt sich, dass die erfindungsgemässe Lösung mit der Referenzfigur und den Winkeln korrespondiert, wobei auch in Abhängigkeit von einer Referenzfigur der Winkel und die genaue Lage der senkrechten Unterteilung der Detektoren im mittleren Bereich anzupassen sind, so dass die Trennung benachbarter Detektorteile möglichst genau im engsten Annäherungsbereich an die zu untersuchende Person liegt.

Die Referenzfigur ist zwar ein an sich absoluter Wert, er kann sich aber im Vergleich zu anderen geographischen Gebieten verändern, so dass eine Anpassung vorteilhaft ist.

Unter diesem Gesichtspunkt ist vorteilhaft, dass der Winkel zwischen den flächigen Detektoren einstellbar ist und Gesperremittel vorgesehen sind, die die Einstellung bis zu einem bestimmten Grad begrenzen.

In einer zweckmässigen Ausführungsform sind Unterarm-Boxen vorgesehen, die sich in einer bestimmten Höhe über der Trittfläche und am äusseren Rand jeweils eines Detektors befinden und sich über die Länge eines Unterarms und einer Hand erstrecken. Hierbei sind die Unterarm-Boxen vorteilhaft in ihrer Längsachse von der Eingangsöffnung bis zum Ende nach oben und mit ihren freien Enden aufeinanderzu gerichtet, wobei zweckmässig einbezogen wird, dass die Längsachsen der Unterarm-Boxen etwa 30° zur Waagerechten geneigt sind.

Es hat sich gezeigt, dass bei einer solchen Ausführung und der Unterarm-Halterung unwillkürlich eine Standdefinierung einer zu untersuchenden Person erreicht wird, die weitgehend optimal ist, wobei vor allem dann im Zusammenhang mit der Ausführung mit nur zwei winklig zueinander angeordneten Detektoren mit wirtschaftlich einfachen Mitteln ein besonders günstiges Ergebnis erreicht wird.

Einbezogen wird dabei zweckmässig, dass die Eingangsöffnung einer Unterarm-Box in der Grössenordnung von 130 cm oberhalb der mit den Fussdetektoren versehenen Trittfläche angeordnet ist. Vorteilhaft ist, dass die Unterarm-Boxen an Einstellvorrichtungen an den äusseren Rändern der Detektoren angeordnet und in ihrer Höhe und Winkelstellung einstellbar sind. Wenn auch oben bereits dargelegt ist, dass der Winkel zwischen den flächigen Detektoren einstellbar ist, dann liegt auch eine bevorzugte Ausführungsform darin, dass der Winkel zwischen den beiden flächigen Detektoren mit ihrer im mittleren Bereich vorgesehenen Unterteilung in Abhängigkeit von der Statur der Referenzfigur einstellbar ist, wobei in der Verbindung zwischen den flächigen Detektoren ein Gelenk angeordnet ist.

Hierbei ist davon auszugehen, dass die Referenzfigur keine konstante Figur ist. Sie kann sich für verschiedene Gegenden in Abhängigkeit von einer durchschnittlichen Körpergrösse ändern. Es gibt Länder, in denen die Durchschnittsgrösse der Menschen kleiner oder grösser als in anderen Gebieten ist. Insofern kann sich die Referenzfigur in Abhängigkeit von dem Einsatzort einer Vorrichtung ändern, so dass in diesem Zusammenhang eine Anpassung vorbehalten bleibt.

Unter diesem Gesichtspunkt liegt eine zweckmässige Ausgestaltung auch darin, dass die senkrechte Unterteilung der beiden flächigen Detektoren anpassbar vorgesehen ist.

Die Erfindung wird im folgenden anhand von Ausführungsbeispielen erläutert, die in der Zeichnung dargestellt sind. Die Zeichnungen sind schematisch. In der Zeichnung zeigen:

Fig. 1 eine Draufsicht auf eine Vorrichtung mit Detektoren und einer eingezeichneten vertikalen Unterteilung in bezug zu einer Referenzfigur;

Fig. 2 eine der Fig. 1 entsprechende Ansicht mit einer zusätzlichen Ausgestaltung in Form von Unterarm-Boxen;

Fig. 3 einen Schnitt längs der Linie III-III in Fig. 2;

Fig. 4 eine flächige Ansicht eines Detektors nach den Fig. 1 oder 2, gesehen in Richtung des Pfeils IV-IV in Fig. 1, auch zur Erläuterung der Anordnung der Unterarm-Boxen;

Fig. 5 eine Seitenansicht von Fig. 2 zur Erläuterung der Ausrichtung der Unterarm-Boxen;

Fig. 6 eine Ansicht der in Draufsicht V-förmigen Anordnung der Detektoren von der den Winkel einschliessenden Seite in einer anderen Ausführung als nach Fig. 4 oder 5.

In allen Figuren sind gleiche Teile mit gleichen Bezugszeichen bezeichnet.

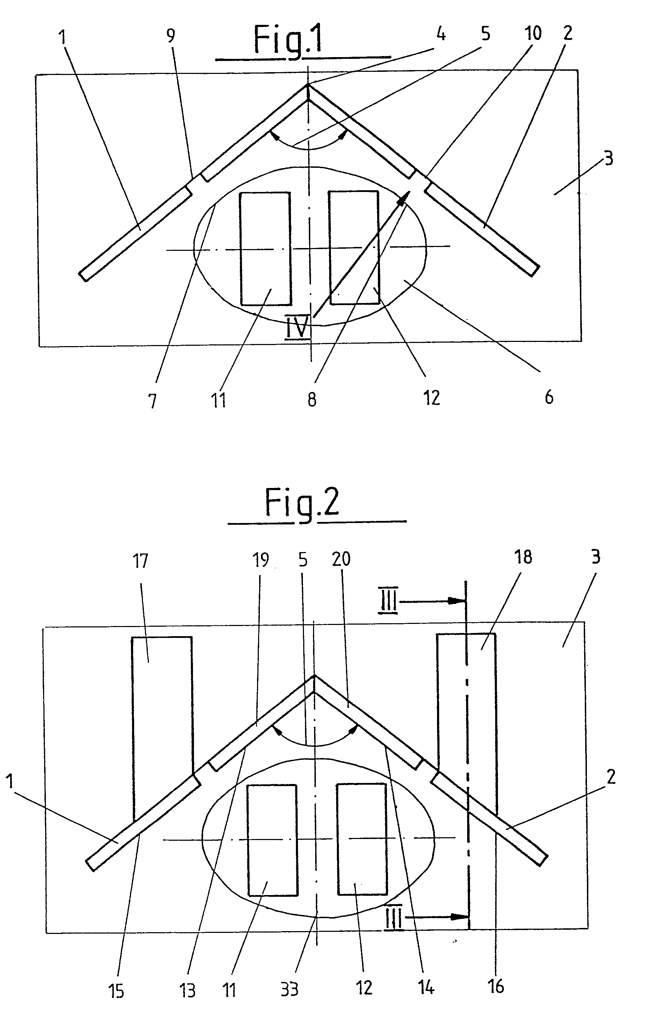

In den Ausführungen nach den Fig. 1 und 2, die Draufsichten zeigen, sind zwei flächige Detektoren 1, 2, welche in senkrechter Anordnung säulenartig vorgesehen sind, auf einer Trittfläche 3 angeordnet. Beide Detektoren 1, 2 sind im Winkelscheitel 4 unter einem Winkel 5 zusammengeschlossen, der im Zusammenhang mit der Ausbildung der Detektoren eine wesentliche Bedeutung hat. Dieser Winkel beträgt unter Einbeziehung aller oben beschriebenen erweiterten Grenzen im bevorzugten Ausführungsbeispiel 104°. Dieser Winkel ist unter dem Einfluss einer Referenzfigur 6 entsprechend der umrandeten Ellipse 7 gewählt. Erkennbar ist dabei, dass der Ellipsenrand bei 7 und 8 Umfangsflächen erhöhter Annäherung an die Detektoren 1, 2 aufweist. An diesen Ellipsenrand-Abschnitten 7, 8 haben die Detektoren 1, 2 eine senkrecht zu der Trittfläche verlaufende Unterteilung 9, 10. Dadurch wird in diesem Bereich die Empfindlichkeit herabgesetzt und ein möglichst gleichmässiges Messergebnis erreicht. Die Unterteilung ist vorteilhaft mittig in der Breite der Detektoren angeordnet, wobei sich in der Annäherung der Unterteilung an die engste Stelle zur Referenzfigur auch die Lage in bezug zur Referenzfigur ergibt.

Diese Ausgestaltung geht auch davon aus, dass die inneren ebenen Aufnahmeflächen 13, 14 bzw. 15, 16 der beiden Detektoren 1, 2 im Bereich des Winkels 5 einander zugekehrt sind.

In einer solchen Ausführung steht die Person mit ihren Füssen insbesondere auf einem in zwei Detektoreinheiten 11, 12 aufgeteilten Fussdetektor. Der Fussdetektor definiert als Trittfläche mit seinen beiden Detektoreinheiten 11, 12 die Stellung jedes Fusses.

Die beiden Detektoren 1, 2 haben in ihrem oberen Bereich zwei Unterarm-Boxen 17, 18, die parallel zueinander verlaufen und bezüglich der Unterteilungen 9, 10 unmittelbar neben dem vom Winkel 5 abgekehrten Rand der inneren Aufnahmeflächen 13, 14 der inneren Detektoren 19, 20 ausgehen.

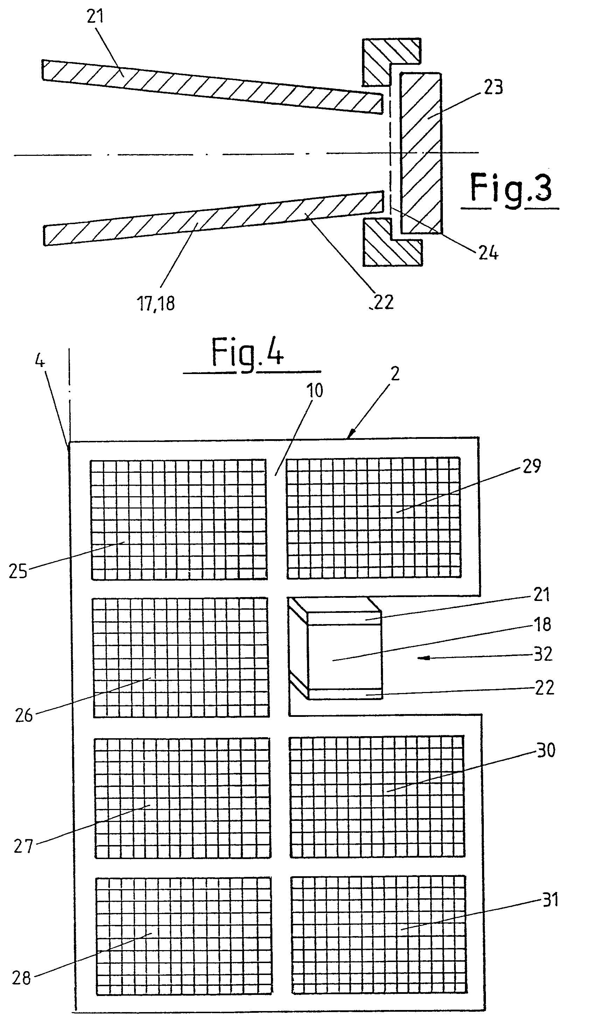

Fig. 3 zeigt dabei, dass die Unterarm-Boxen obere und untere langgestreckte, d.h. entsprechend der Länge eines Unterarms und einer ausgestreckten Hand bemessene flächige Detektoren 21, 22 aufweisen, die zu ihren von den Detektoren 1, 2 entfernten Enden aufeinander zu verlaufen. Im Bereich dieser Enden sind Überwachungsanordnungen, beispielsweise Annäherungsdetektoren 23 oder aber auch fotoelektrische Schranken 24 angeordnet, um sicherzustellen, dass die Unterarme in genügender Tiefe eingeführt sind.

In diesem Zusammenhang wird auch auf Fig. 4 verwiesen, in welcher ein Detektor 2 in Innenansicht erkennbar ist. Dabei zeigt sich, dass die Unterteilung 10 von oben nach unten durchläuft. Der Detektor ist im übrigen auch durch horizontale Unterteilung in einzelne Detektorfelder 25 bis 31 aufgegliedert, wobei bevorzugt wird, dass diese rechteckig flächig ausgeführten Detektoren mit ihrer längeren Achse in senkrechter Richtung angeordnet sind. Gemäss Fig. 4 hat der Detektor neben dem winkligen Zusammenschluss mit dem anderen Detektor am Winkelscheitel 4 eine senkrechte Reihe von vier Detektorfeldern 25–28, während bezüglich des Zusammenschlusses bei 4 ausserhalb der senkrechten Unterteilung 10 oben ein Detektorenfeld 29 und parallel zu den unteren Detektorenfeldern 27, 28 Detektorfelder 30 und 31 vorhanden sind. Dies bedeutet eine Aussparung neben dem Detektorfeld 26.

Gemäss Fig. 4 hat der Detektor eine Aussparung neben dem Detektor 26 ausserhalb der Unterteilung 10. In dem dadurch geschaffenen Freifeld 32 ist die Unterarm-Box 18 befestigt. Hierbei wird in Kauf genommen, dass in diesem Bereich der Körper der Referenzfigur einer geringeren Messabdeckung unterliegt, aber die Anordnung der Unterarm-Boxen in ihrem Verlauf mit Abstand von der Mittellinie 33 (Fig. 2) erfüllt durch Einführung des Unterarms eine unwillkürliche Fesselung derart, dass gute Messergebnisse erreicht werden.

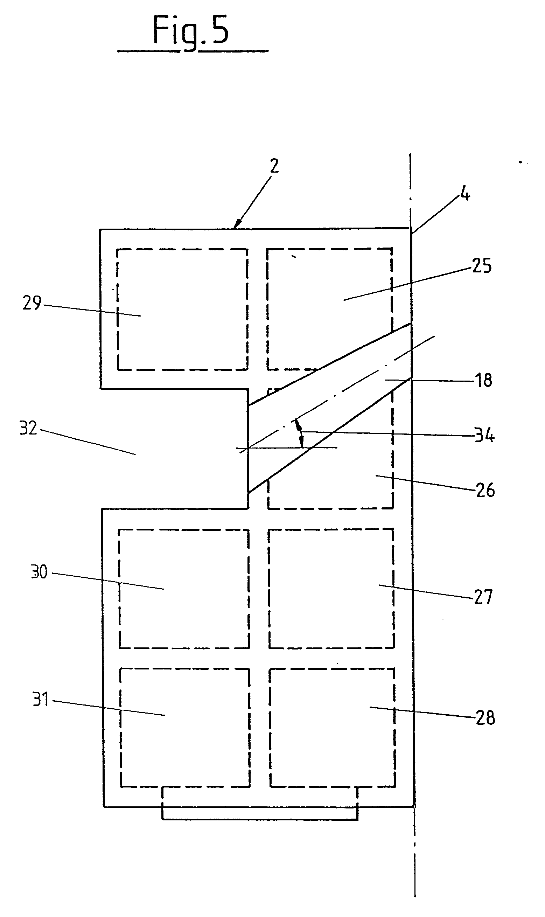

Dies gilt insbesondere dann, wenn (Fig. 5, die eine Aussenansicht der Vorrichtung nach Fig. 1 von der Seite zeigt) die Unterarm-Boxen 17, 18 zur Waagerechten einen Winkel 34 in der Grössenordnung von 30° einnehmen. Es hat sich gezeigt, dass über einen grossen Bereich der gängigen Körpergrössen eine solche Anordnung von Unterarm-Boxen 17, 18 im gegenseitigen Abstand und in ihrer Neigung zum Hand-Ende nach oben für eine zwanglose Aufstellung einer Person günstig ist.

Diese günstige Ausführung ermöglicht eine leichte Einführung der Unterarme, wobei nun schon gegenüber bekannten Ausführungen Abweichungen aufgrund einer Handgelenkbewegung ausgeschlossen werden. Die Anordnung in Verbindung mit nur zwei, aber in senkrechter Richtung unterteilten Detektoren und der beschriebenen Anordnung der Unterarm-Boxen führt bei einer leichten Einführung der Unterarme zu einer quasi selbstverständlichen Personenstellung auf den Fussdetektoreinheiten 11, 12.

Bezüglich der Anordnung und Ausrichtung der Unterarm-Boxen 17, 18 wird bemerkt, dass diese in Fig. 4 nur schematisch gezeigt sind und praktisch aber eine schräg winklige Anordnung vorgesehen ist. Bevorzugt wird dabei natürlich die Befestigung an den Detektoren 1, 2, damit insofern eine feste Einheit entsteht.

Der Ausdruck «feste Einheit» bezieht einen Sockel mit der Trittfläche 3 ein. Der Ausdruck «feste Einheit» bezieht auch den Winkel zwischen den beiden flächigen Detektoren 1, 2, wenigstens im Messzustand bzw. Messaugenblick, ein. Dieses bedeutet, dass die beiden flächigen Detektoren 1, 2 relativ zueinander schwenkbar sein können, um Einstellungen vorzunehmen.

Diese Ausführung bedeutet, dass für die Detektoren 1, 2 jeweils Scharnierstangen vorgesehen sind, an denen der Winkel zwischen den flächigen Detektoren 1, 2 einstellbar ist, wobei aber zwischen den einzelnen Detektoren 1, 2 und den Scharnierstangen Lager und/oder Gesperremittel vorgesehen sind. Solche Gesperremittel können über die Höhe bzw. axiale Länge der Scharnierstangen verteilt angeordnet sein.

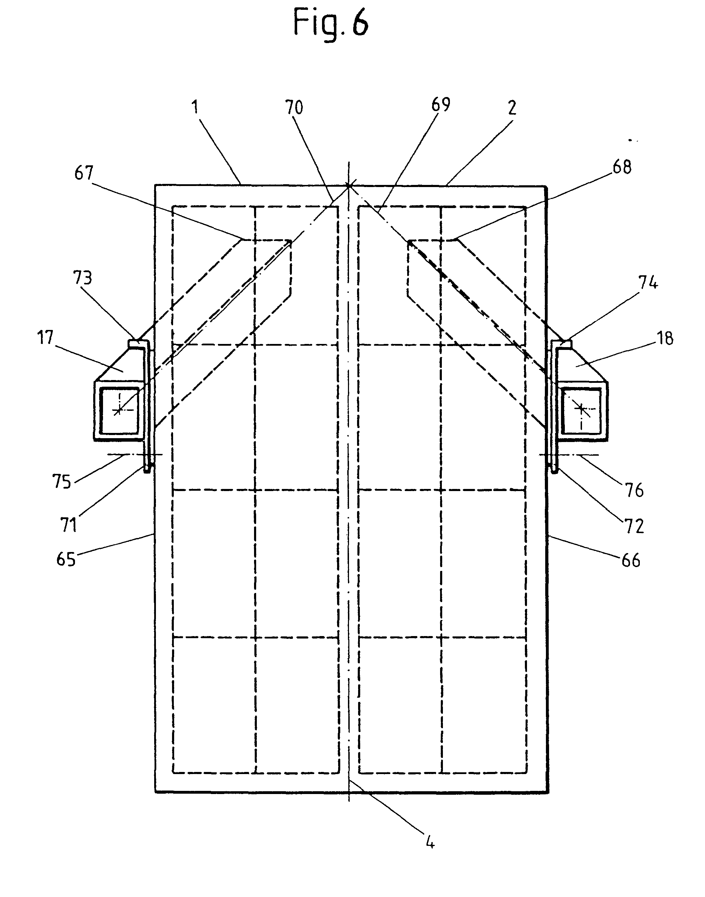

In Fig. 6 sind zwei Detektoren 1, 2 unter einem Winkel am Winkelscheitel 4 zusammengeschlossen. Diese Detektoren 1, 2 können einen von oben nach unten bis jeweils zu den Seitenrändern durchgehenden in der Senkrechten, im mittleren Bereich unterteilten Detektor haben oder, wie gestrichelt eingezeichnet ist, Detektorfelder 25 bis 31, beispielsweise bei dem Detektor 2 in Fig. 4 unter Einbeziehung des dort so bezeichneten Freifeldes 32 auch als Detektorfeld. Im Bereich des Detektors 1 sind entsprechende Felder vorgesehen.

Die beiden Unterarm-Boxen 17, 18 sind in dieser Ausführungsform aussen an den äusseren Rändern 65, 66 angeordnet, so dass die Detektorfelder der Detektoren 1, 2 über die gesamte Höhe in gleicher Breite gehen. Die beiden Unterarm-Boxen 17, 18 sind nach Fig. 6 auch schräg nach oben gerichtet, aber in Draufsicht nicht parallel, sondern mit ihren Enden 67, 68 einander angenähert, d. h. verlängernde Mittellinien 69, 70 schneiden sich in der Winkellinie hinter der Mittellinie bei 4, wobei der Winkel zwischen den beiden Mittellinien 69, 70 spitzer ist als der Winkel 5 zwischen den Detektoren.

Eine Einstellbarkeit ist vorgesehen, indem die Unterarm-Boxen 17, 18 an Einstellvorrichtungen 71, 72 befestigt sind, an denen sie sowohl in der Höhe als auch in ihrem Schwenkwinkel aufeinanderzu einstellbar sind. Für die Einstellung können Handhebel 73, 74 und Feststellschrauben 75, 76 angeordnet sein. Die Einstellvorrichtungen 71, 72 können in Form von Gelenken mit Drehachsen als Spindeln ausgeführt sein, an denen die Unterarm-Boxen 17, 18 an Muttern geführt sind, wobei die Feststellmittel eine Endlage fixieren. Dadurch ist eine Anpassung an verschiedene Durchschnittsgrössen von benutzenden Personen möglich.

## Patentansprüche

1. Vorrichtung zur Kontaminationsüberwachung gegen Strahlungsverseuchung von Personen, mit einer Trittfläche (3) als Bodenplatte, die einen Fussdetektor aufweist, der für jeden Fuss eine Detektoreinheit (11, 12) hat, und mit in jeweils einer zur Trittfläche (3) senkrechten Ebene angeordneten flächigen Detektoren (1, 2), die in einem Winkel von ungleich 0° zueinander angeordnet sind und einen Teilraum für eine zu untersuchende Person begrenzen, dadurch gekennzeichnet, dass zwei aneinander angeordnete flächige Detektoren (1, 2) vorgesehen sind, die jeweils senkrecht zur Trittfläche (3) in ihrem mittleren Bereich eine Unterteilung (9, 10) aufweisen, die an der Stelle vorgesehen ist, an der die flächigen Detektoren (1, 2) den geringsten Abstand von einem als Referenzfigur (6) eingesetzten Standardkörper besitzen.

2. Vorrichtung nach Anspruch 1, dadurch gekennzeichnet, dass die Aufnahmeflächen der beiden flächigen Detektoren (1, 2) zueinander in einem Winkel von 90° bis 118° angeordnet sind.

3. Vorrichtung nach Anspruch 1, dadurch gekennzeichnet, dass die Aufnahmeflächen der beiden flächigen Detektoren (1, 2) zueinander in einem Winkel von etwa 104° angeordnet sind.

4. Vorrichtung nach einem der Ansprüche 1 bis 3, dadurch gekennzeichnet, dass die senkrechte Unterteilung (9, 10) in der Mitte der flächigen Detektoren (1, 2) angeordnet ist.

5. Vorrichtung nach einem der Ansprüche 1 bis 4, dadurch gekennzeichnet, dass der Winkel zwischen den flächigen Detektoren (1, 2) einstellbar ist und Gesperremittel vorgesehen sind, die die Einstellung bis zu einem bestimmten Grad begrenzen.

6. Vorrichtung nach einem der Ansprüche 1 bis 5, dadurch gekennzeichnet, dass Unterarm-Boxen (17, 18) vorgesehen sind, die sich in einer bestimmten Höhe über der Trittfläche (3) und am äusseren Rand jeweils eines Detektors (1, 2) befinden und sich über die Länge eines Unterarms und einer Hand erstrecken.

7. Vorrichtung nach Anspruch 6, dadurch gekennzeichnet, dass die Unterarm-Boxen (17, 18) in ihrer Längsachse von der Eingangsöffnung bis zum Ende nach oben und mit ihren freien Enden (67, 68) aufeinanderzu gerichtet sind.

8. Vorrichtung nach Anspruch 7, dadurch gekennzeichnet, dass die Längsachsen der Unterarm-Boxen (17, 18) etwa 30° zur Waagerechten geneigt sind und dass die Eingangsöffnung einer Unterarm-Box (17, 18) in der Grössenordnung von 130 cm oberhalb der mit den Fussdetektoren (11, 12) versehenen Trittfläche angeordnet ist.

9. Vorrichtung nach einem der Ansprüche 6 bis 8, dadurch gekennzeichnet, dass die Unterarm-Boxen (17, 18) an Einstellvorrichtungen (71, 72) an den äusseren Rändern (65, 66) der Detektoren (1, 2) angeordnet und in ihrer Höhe und Winkelstellung einstellbar sind.

10. Vorrichtung nach Anspruch 1 oder 5, dadurch gekennzeichnet, dass der Winkel zwischen den beiden flächigen Detektoren (1, 2) mit ihren im mittleren Bereich vorgesehenen Unterteilungen (9, 10) in Abhängigkeit von der Statur der Referenzfigur (6) einstellbar ist, wobei in der Verbindung zwischen den flächigen Detektoren (1, 2) ein Gelenk angeordnet ist, und dass die senkrechte Unterteilung (9, 10) der beiden flächigen Detektoren (1, 2) jeweils anpassbar vorgesehen ist.

## Claims

1. An apparatus for monitoring persons for contamination by radiation, comprising a tread surface (3) as a floor plate, which comprises a foot detector having a detector unit (11, 12) for each foot, and surface detectors (1, 2), which are arranged in respective planes, which are at right angles to the tread surface (3), and which extend at an angle that is different from 0° to each other and define a compartment for a person to be monitored, characterized in that two adjoining surface detectors (1, 2) are provided, each of which has in its central portion a gap (9, 10) which is at right angles to the tread surface (3) and is provided at that location at which the surface detectors are spaced the smallest distance from a standard body that is employed as a reference figure (6).

2. An apparatus according to claim 1, characterized in that the receiving surfaces of the two surface detectors (1, 2) extend at an angle of 90 to 118 degrees to each other.

3. An apparatus according to claim 1, characterized in that the receiving surfaces of the two surface detectors (1, 2) extend at an angle of about 104° to each other.

4. An apparatus according to any of claims 1 to 3, characterized in that the vertical gap (9, 10) is disposed at the centre of each surface detector (1, 2).

5. An apparatus according to any of claims 1 to 4, characterized in that the angle between the surface detectors (1, 2) is adjustable and ratchet means are provided for limiting the adjustment to a certain degree.

6. An apparatus according to any of claims 1 to 5, characterized in that underarm boxes (17, 18) are provided, which are disposed at a certain elevation over the tread surface (3) and at the outer edge of respective detectors (1, 2) and extend over the length of an underarm and a hand.

7. An apparatus according to claim 6, characterized in that the longitudinal axes of the underarm boxes (17, 18) extend upwardly from the entrance opening to the end and their free ends (67, 68) converge towards each other.

8. An apparatus according to claim 7, characterized in that the longitudinal axes of the underarm boxes (17, 18) have an inclination of about 30° to the horizontal and the entrace opening of an underarm box (17, 18) is spaced a distance of an order of 130 cm above the tread surface (11, 12), which is provided with the foot detectors (11, 12).

9. An apparatus according to any of claims 6 to 8, characterized in that the underarm boxes (17, 18) are mounted on adjusting means (71, 72) at the outer edges (65, 66) of the detectors (1, 2) and can be adjusted in height and angular position.

10. An apparatus according to claim 1 or 5, characterized in that the angle between the two surface detectors (1, 2) having gaps (9, 10) in their central region is adjustable in dependence on the stature of the reference figure (6), a hinge is provided in the joint between the surface detectors (1, 2) and the vertical gap (9, 10) of each of the two surface detectors (1, 2) is provided to be adaptable.

**Revendications**

1. Dispositif qui, destiné à contrôler la contamination de personnes par irradiation, est équipé d'un plateau (3) servant de plaque porteuse et comportant un détecteur de pieds, lequel présente pour chaque pied un élément détecteur (11, 12), et de détecteurs plats (1, 2) disposés chacun dans un plan perpendiculaire au plateau (3) et qui font entre eux un angle différent de 0° et limitent un espace partiel pour une personne à examiner, caractérisé en ce qu'il est prévu deux détecteurs plats (1, 2) qui, contigus l'un à l'autre, présentent chacun perpendiculairement au plateau, ou plaque porteuse, (3) dans sa région médiane un intervalle de partage (9, 10) qui est prévu à l'endroit où les détecteurs plats (1, 2) se trouvent à la plus petite distance d'un corps standard utilisé en tant que figure de référence (6).

2. Dispositif selon la revendication 1, caractérisé en ce que les surfaces réceptrices des deux détecteurs plats (1, 2) sont disposés l'une par rapport à l'autre sous un angle de 90 à 118°.

3. Dispositif selon la revendication 1, caractérisé en ce que les surfaces réceptrices des deux détecteurs plats (1, 2) sont disposés l'une par rapport à l'autre sous un angle d'environ 104°.

4. Dispositif selon l'une quelconque des revendications précédentes, caractérisé en ce que l'intervalle de partage vertical (9, 10) est disposé au milieu des détecteurs plats (1, 2).

5. Dispositif selon l'une quelconque des revendications précédentes, caractérisé en ce que l'angle entre les détecteurs plats (1, 2) est réglable et en ce qu'il est prévu des moyens d'arrêt qui limitent le réglage à un degré déterminé.

6. Dispositif selon l'une quelconque des revendications précédentes, caractérisé en ce qu'il est prévu des boîtiers (17, 18) pour avant-bras qui se trouvent à une certaine hauteur au-dessus du plateau, ou plaque porteuse, (3) et chacun au bord extérieur d'un détecteur (1, 2) et s'étendent sur la longueur d'un avant-bras et d'une main.

7. Dispositif selon la revendication 6, caractérisé en ce que les boîtiers (17, 18) pour avant-bras sont dirigés en ce qui concerne leur axe longitudinal, à partir de l'ouverture d'entrée jusqu'à l'extrémité, vers le haut et sont orientés l'un vers l'autre avec leurs extrémités libres (67, 68).

8. Dispositif selon la revendication 7, caractérisés en ce que les axes longitudinaux des boîtiers (17, 18) pour avant-bras sont inclinés d'environ 30° par rapport à l'horizontale et en ce que l'ouverture d'entrée d'un boîtier (17, 18) pour avant-bras est située à environ 130 cm au-dessus du plateau muni des détecteurs de pieds (11, 12).

9. Dispositif selon l'une quelconque des revendications 6 à 8, caractérisé en ce que les boîtiers (17, 18) pour avant-bras sont montés sur des dispositifs de réglage (71, 72) au niveau des bords extérieurs (65, 66) des détecteurs (1, 2) et sont réglables dans leurs hauteur et position angulaire.

10. Dispositif selon la revendication 1 ou 5, caractérisé en ce que l'angle entre les deux détecteurs plats (1, 2) avec leurs intervalles de partage (9, 10) prévus dans la région médiane est réglable en fonction de la taille de la figure de référence (6), une articulation étant montée au niveau de la liaison entre les détecteurs plats (1, 2), et en ce que l'intervalle de partage vertical (9, 10) des deux détecteurs plats respectifs (1, 2) est prévu de façon à être adaptable.

Fig.1

Fig.2

Fig.3

Fig.4

# Fig.5

# Fig. 6